# EUROPEAN PATENT APPLICATION

(11) **EP 1 365 532 A1**
(43) Date of publication of application: **26.11.2003**
(21) Application number: 02253599.1
(22) Date of filing: 22.05.2002
(51) Int. Cl.: H04J 14/08, H04J 14/02, H04L 7/00

(54) **Multi-channel simultaneous optical time domain multiplexer and OTDM-WDM converter**

(71) Applicant: LUCENT TECHNOLOGIES INC., Murray Hill, New Jersey 07974-0636 (US)
(72) Inventor: Smets, Rob C., 1381 XV Weesp (NL)
(74) Representative: Sarup, David Alexander

(57) **Abstract**

System for optical multiplexing and de-multiplexing an optical time domain multiplexed data stream signal, the optical time domain multiplexed data stream signal including a plurality of bits ordered in a timed sequence of bits from an equal plurality of data channels, the timed sequence of bits having a bit time slot for each bit in the sequence wherein in the optical time domain multiplexed data stream signal one bit of the plurality of bits is provided with a higher intensity than the other incoming bits of the plurality of bits, and the system includes a single channel selector (20) for selecting the bit with the higher intensity to obtain a clock signal from the optical time domain multiplexed data stream signal.

## Description

### Field of the invention

The present invention relates to a system for optical multiplexing and de-multiplexing (preamble claim 1). Also, the present invention relates to an optical network comprising such a system. Further, the present invention relates to a method to be carried out by such a system.

### Prior art

Such systems for optical multiplexing and de-multiplexing are known in the art of optical (fibre-based) communication networks for routing and switching purposes. Multiple optical signals are multiplexed at one end of a fibre, transmitted over that fibre, and de-multiplexed at the other end of the fibre. After de-multiplexing, routing and/or switching can take place based on the information contained in the respective signal. Such a system is described by D. Wolfson, A. Kloch et al. in "40 Gb/s All-Optical Wavelength Conversion, Regeneration, and De-multiplexing in an SOA-Based All-Active Mach-Zehnder Interferometer", IEEE PTL, 3:332-334, (2000).

Conventional de-multiplexing, i.e., detection and signal processing of optical signals by state-of-the-art electronics, after conversion to the electric domain, is only possible at lower line rates due to the limited processing speed of the electronics.

Typically, systems for optical multiplexing and de-multiplexing are used when the line rate of a transmission link in the network becomes so high that multiplexing and de-multiplexing in the electronic domain is no longer practically possible. For example, such line rates may be applied in grid computing applications or large distributed networks, where large amounts of data may need to be transferred in the shortest possible time. Thus, at higher line rates (from, say, 40 gigabit per second [Gb/s] and up) full optical multiplexing and de-multiplexing of optical signals is required.

In case of a 160 Gb/s transmission link data can be (time-domain) multiplexed to a four times 40 Gb/s or a sixteen times 10 Gb/s data stream. In case of a four times 40 Gb/s multiplexed data stream signal the data transmitted over the link comprise four data channels of which the data bits of each channel are transmitted in consecutive order: When multiplexing signals of each data channel as an optical time-domain multiplexed signal, from each separate data channel a data bit is inserted in the data stream at a time slot dedicated to that specific channel.

Conventional systems for full optical multiplexing and de-multiplexing apply Sagnac or Mach-Zehnder interferometers with one or more non-linear optical components inside its loop or branches. In an interferometer of one of these types, the non-linearity of optical fibre (four wave mixing (FWM) effect) or a semiconductor optical amplifier (SOA) is commonly used for channel selection in the transmitted data stream.

Disadvantageously, in such a conventional system for full optical multiplexing and de-multiplexing for each channel a dedicated interferometer is needed to select the respective channel. This may impose severe demands on available resources and may not be cost-efficient. Integration may be difficult due to the large number of active components required. For example, de-multiplexing a 160 Gb/s data stream in a sixteen times 10 Gb/s transmission link, requires 16 interferometers. If Mach-Zehnder interferometers are used, each interferometer comprises two semiconductor optical amplifiers and two couplers.

Also, the input power of the incoming multiplexed 160 Gb/s data stream signal must be divided over 16 Mach-Zehnder interferometers, which also sets a minimum requirement for the power of the laser source that generates the incoming multiplexed signal.

Furthermore, synchronisation of the data stream on the recovered clock signal (i.e., recovered from the data stream) is needed to perform the actual switching between channels. In systems for full optical multiplexing and de-multiplexing from the prior art, synchronisation may be difficult due to the problem of identifying sync bits in the data stream.

Finally, in systems for full optical multiplexing and de-multiplexing from the prior art, it is not possible to scale the system with respect to the number of multiplexed channels, due to the necessity to have a rigid synchronisation detection of sync bits. Each system is dedicated to a predetermined number of channels.

### Summary of the invention

It is an objective of the present invention to provide a system for full optical multiplexing and de-multiplexing, that allows a simpler de-multiplexing technique than in the prior art.

Therefore, the present invention relates to a system for full optical multiplexing and de-multiplexing as defined in the preamble of claim 1, characterised in that
[to be inserted later].

The system according to the present invention allows the extraction of a large number of channels from a high speed optical time domain multiplexed signal. By using a higher intensity of one of the data channels, an identification of data channels and a simple generation of an internal clock signal is possible.

By converting each time domain channel to a specific wavelength, detection of data bits for a specific channel is greatly simplified. Isolation of channels can be done by an arrayed wave guide grating that by the principle of diffraction, splits an incoming multiplexed optical signal, containing data bits represented in a specific wavelength for a specific channel, in separate signals each comprising the data bits in that channel.

An advantage of the present invention is that because an arrayed wave guide grating has an insertion loss that is independent of the number of wavelengths, the system can be designed in such way that it is scalable with respect to the number of time slots in the data stream transmitted over the optical link,

A further advantage of a system for full optical multiplexing and de-multiplexing is the fact that such a system may be fully integrated on a single chip, which simplifies the implementation of such a system in optical communication networks.

### Brief description of drawings

Below, the invention will be explained with reference to some drawings, which are intended for illustration purposes only and not to limit the scope of protection as defined in the accompanying claims.
Figure 1 shows a schematic diagram of an embodiment of a system for full multiplexing and de-multiplexing in accordance with the present invention;
Figure 2 shows a schematic diagram of an arrangement for a single channel selector;
Figure 3 shows a schematic representation of an optical data stream as used in the present invention before passing a single channel selector;
Figure 4 shows a schematic representation of an optical data strcam as used in the present invention after passing the single channel selector;
Figure 5 shows a schematic diagram of the function of a wavelength converter as used in the present invention.

### Description of preferred embodiments

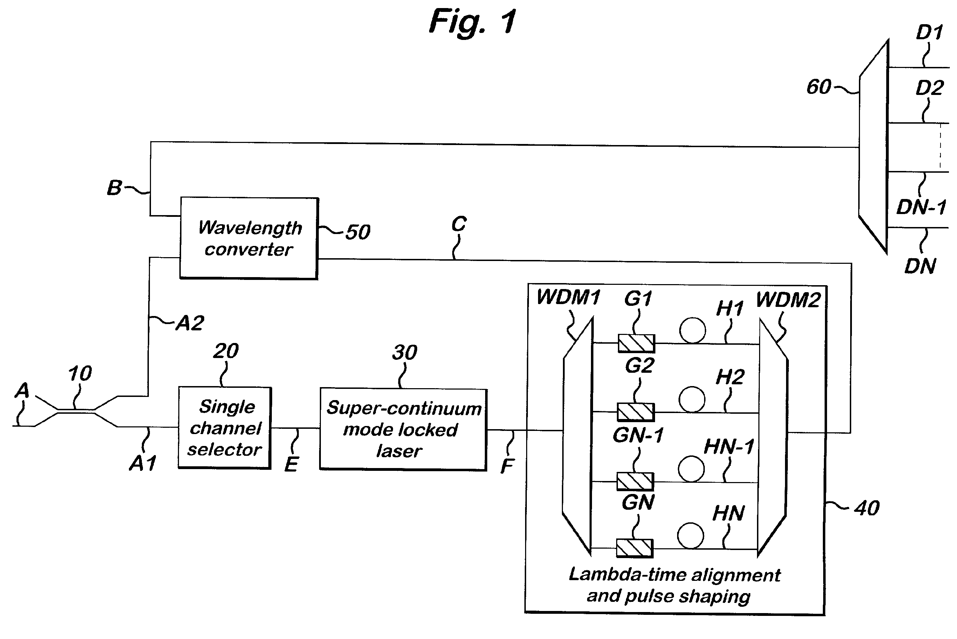

Figure 1 shows a schematic diagram of an embodiment of a system for full multiplexing and de-multiplexing in accordance with the present invention.

The system 1 according to the present invention comprises a coupler 10, a single channel selector 20, a super-continuum mode-locked laser 30, a lambda-time alignment and pulse shaping unit 40, a wavelength converter 50 and a distribution element 60.

The coupler 10 is connected to an optical connection A in order to receive incoming optical time domain multiplexed signals from an optical network (not shown). Further, coupler 10 is connected by optical connections A1 and A2 to the single channel selector 20 and to the wavelength converter 50, respectively, for transmission of the incoming optical time domain multiplexed signals. The single channel selector 20 is connected by a connection E to the super-continuum mode-locked laser 30. The super-continuum mode-locked laser 30 is further connected by optical connection F to the lambda-time alignment and pulse shaping unit 40. Next, the lambda-time alignment and pulse shaping unit 40 is further connected by an optical connection C to the wavelength converter 50. Finally, the wavelength converter 50 is connected by an optical connection B to the distribution element 60. The optical connections A1, A2, E, F, C, and B are used to transmit optical signals between the respective components. Depending on the actual embodiment the optical connections may be glass fibres in case of separate components or on-chip optical waveguides, in case of an on-chip integrated system 1.

The coupler 10 splits an incoming optical time domain multiplexed (OTDM) signal on connection A in two identical signals on connection A1 and A2, respectively, and couples the respective signals on A1 and A2 to the single channel selector 20 and the wavelength converter 50, respectively. As known to persons skilled in the art, the intensity of the signals on A1 and A2 depends on the splitting ratio of the coupler 10.

The single channel selector 20 receives the OTDM signal from connection A1 and selects a single data channel from the received OTDM signal.

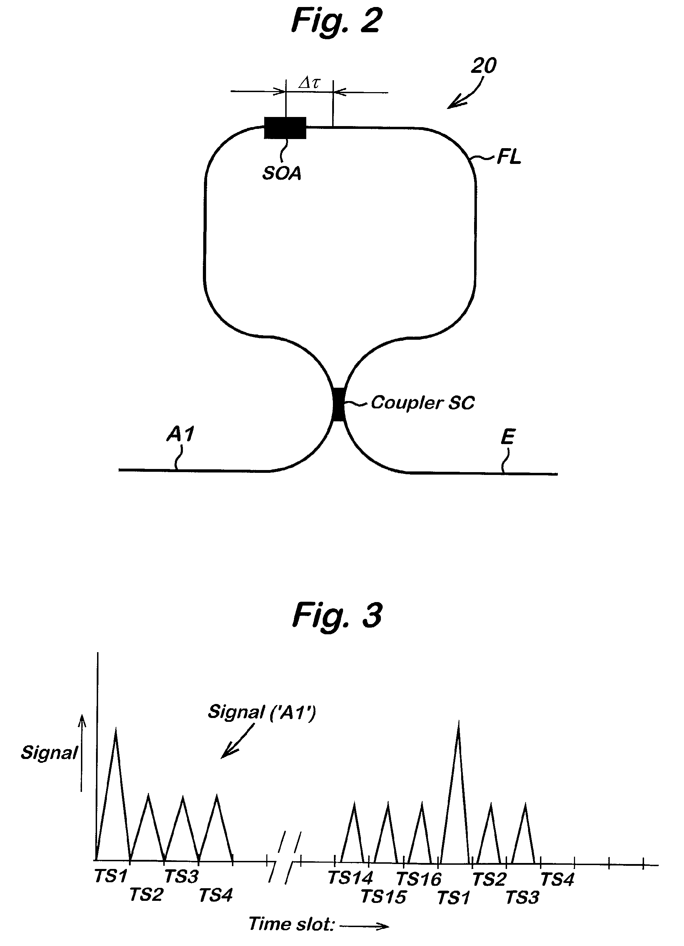

Figure 2 shows a schematic diagram of an arrangement for a single channel selector 20.

The single channel selector 20 shown here is a Sagnac interferometer. The Sagnac interferometer comprises an entry for optical signals at optical connection A1, an exit for optical signals at optical connection E, an optical coupler SC, a fibre loop FL starting and ending at the coupler. The fibre loop FL comprises a semiconductor optical amplifier (SOA).

The channel selection is based on the non-linear properties of the SOA. In the optical coupler SC, an incoming optical signal is split and propagates as a first signal OS1 in clockwise direction and as a second signal OS2 in anti-clockwise direction over the fibre loop FL. As will be appreciated by persons skilled in the art: optical signals of relatively low intensity that enter the Sagnac interferometer at A1 do not saturate the SOA, and will not cause constructive interference between the first and second signal OS1 and OS2. Therefore, no optical signal will be present at the exit at optical connection E.

Optical signals of a relatively higher intensity are capable to saturate the SOA and cause constructive interference between the first and second optical signals OS1 and OS2, which will generate an optical signal at the exit at optical connection E of the Sagnac interferometer.

Figure 3 shows a schematic representation of an optical data stream as used in the present invention on the optical connection A1 before passing the single channel selector 20.

The optical data stream entering the system of the present invention at optical connection A is multiplexed and comprises a plurality of channels each at its specific time slot in the stream. In Figure 3 a data stream signal at an exemplary data rate of 640 Gb/s is represented schematically. As a function of time (horizontal axis) the data in each channel is shown as a pulse having a pulse intensity (vertical axis). In this example, the data stream comprises 16 data channels with their respective time slots TS 1 - TSN, each data channel having a data rate of 40 Gb/s in this example.

It is noted that for clarity here each data channel is shown as a pulse with pulse intensity (representing e.g., an 'on' bit) in its respective time slot, but instead the data channel may also comprise a zero pulse intensity signal (an 'off' bit). After the last data channel bit (here: TS16), the next bit of the data channel (here: TS1) is transmitted in the data stream. It is noted that a zero pulse intensity signal may have an actual zero intensity or a low intensity that serves as 'off' bit signal. An 'on' bit may represent a '1' value and an 'off bit a '0' value, or vice versa.

The channel selector 20 provides an internal clock signal for the optical data stream entering the system of the present invention at optical connection A, by using in the optical network a pulse intensity for one of the data channels which is relatively higher than the pulse intensity of the other data channels. In the present invention, the intensity of one data channel is set at relative higher intensity. In the example shown here, the first data channel has a higher intensity, but instead, any other channel may also be chosen to have the higher intensity. It is noted that, alternatively, in the optical data stream a spectral component to be used for clock recovery, may also be generated by a suitable coding of the bits to be transmitted.

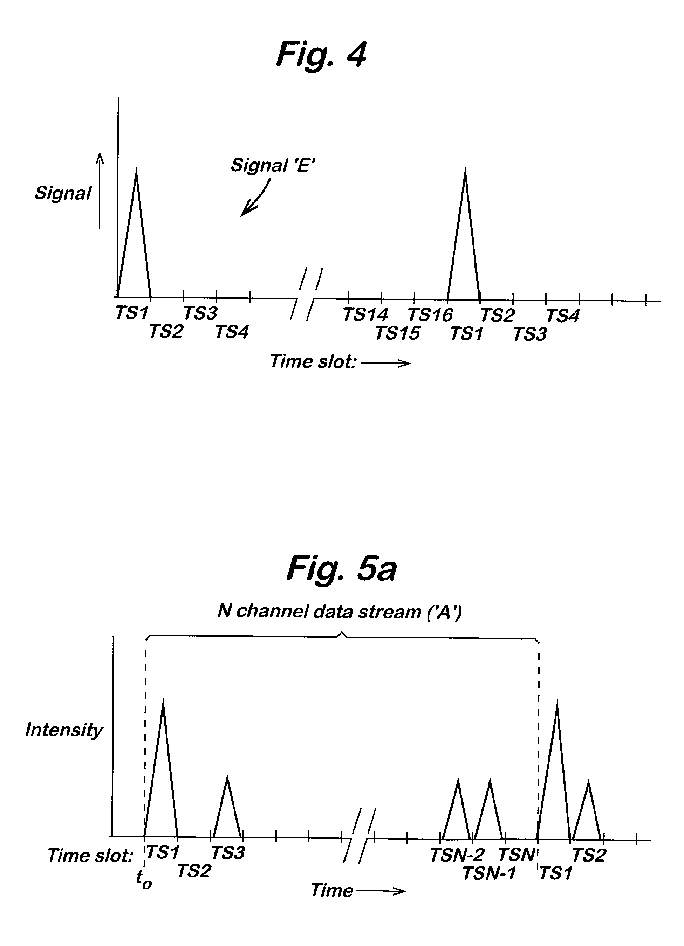

Figure 4 shows a schematic representation of an optical data stream as used in the present invention on connection E after passing the single channel selector 20.

Figure 4 shows the result of the channel selection as performed on the optical data stream signals shown in Figure 3. Only the pulses with relative high pulse intensity are passed by the channel selector 20. In this example, only the data bits in the first data channel (TS1) have passed the channel selector 20. It is noted that the data bit in the first data channel may actually be either '0' or '1': in the present invention clock recovery is still possible by using optical injection locking or passive mode locking. The use of optical injection locking or passive mode locking to preserve a periodic pulse signal is well known to persons skilled in the art.

The optical data stream emerging at optical connection E is used as input for the super-continuum mode-locked laser 30. A super-continuum laser 30 generates extremely small optical pulses in a broad spectrum with a plurality of frequency components. In the example shown here, the frequency components are spaced at 40 Ghz to correspond with the data rate of the individual data channels.

The super-continuum mode-locked laser 30 is known as such in the prior art. If broad-band saturable amplifiers and absorbers are used, the super-continuum mode-locked laser 30 can be realised using colliding pulse mode locking technology. In that case, the small optical pulses in the broad spectrum are phase-related in such a way that in the time-domain a plurality of (coinciding) mode locked pulses are generated, each mode-locked pulse having a specific centre frequency. Thus at the optical connection F, an output of a multi-wavelength pulse (i.e., a plurality of narrow (nearly Fourier-transformed limited) pulses) is generated as result of the pulse input in the super-continuum model-lock laser 30 at connection E. In the example shown here, the multi-wavelength pulse comprises 16 pulses, each with its specific wavelength.

Next, the multi-wavelength pulse is input into the lambda-time alignment and pulse shaping unit 40 (Figure 1). The lambda-time alignment and pulse shaping unit 40 comprises a first wavelength division multiplexer WDM1, a second wavelength division multiplexer WDM2, a plurality of N fibre Bragg gratings G1 ...GN, and a plurality of N delay lines H1 ... HN. In this example of 16 wavelengths, N equals 16.

In the lambda-time alignment and pulse shaping unit 40 the incoming connection F is connected to the first wavelength division multiplexer WDM1. The first wavelength division multiplexer WDM1 is connected to the plurality of N fibre Bragg gratings G1 ... GN. Each fibre Bragg grating G1 ... GN is connected to one of the respective delay lines H1 ... HN. The plurality of delay lines H1 ... HN is connected to the second wavelength division multiplexer WDM2.

The incoming multi-wavelength pulse at connection F is split in its single wavelength pulses by the first wavelength division multiplexer WDM1.

Next, each single wavelength pulse passes the fibre Bragg grating G1 ... GN in its respective optical path in the lambda-time alignment and pulse shaping unit 40. The fibre Bragg grating G1 ... GN performs a pulse shaping operation on the single wavelength pulse that passes on the respective optical path. In case of Fourier-limited pulses of short width, no pulse shaping may be needed and the fibre Bragg grating G1 ...GN can be omitted from the lambda-time alignment and pulse shaping unit 40.

After passing the fibre Bragg grating G1 ... GN pulses will have a typical width of a few picoseconds. This pulse time must be less than or, at very most, equal to the pulse time for a single bit as occurring in the line signal at optical connection A.

In the delay lines H1 ... HN each single pulse is delayed in such way that when the pulses from each delay line H1 ... HN arrive at the second wavelength division multiplexer WDM2, in the second wavelength division multiplexer WDM2 a multi-wavelength pulse train of a series of pulses, with each pulse having a specific wavelength is formed. The delay between the pulses in the multi-wavelength pulse train is substantially identical to the time between consecutive pulses in the incoming optical time domain multiplexed signal at optical connection A, as given by the bit time slots TS1 ...TSN. The delay time of each delay line H1 ... HN is thus adjusted accordingly to obtain such a substantially equal delay with pulse time slots PS1 ... PSN. The pulse train is transmitted from the lambda-time alignment and pulse shaping unit 40 to the wavelength converter 50 over the optical connection C.

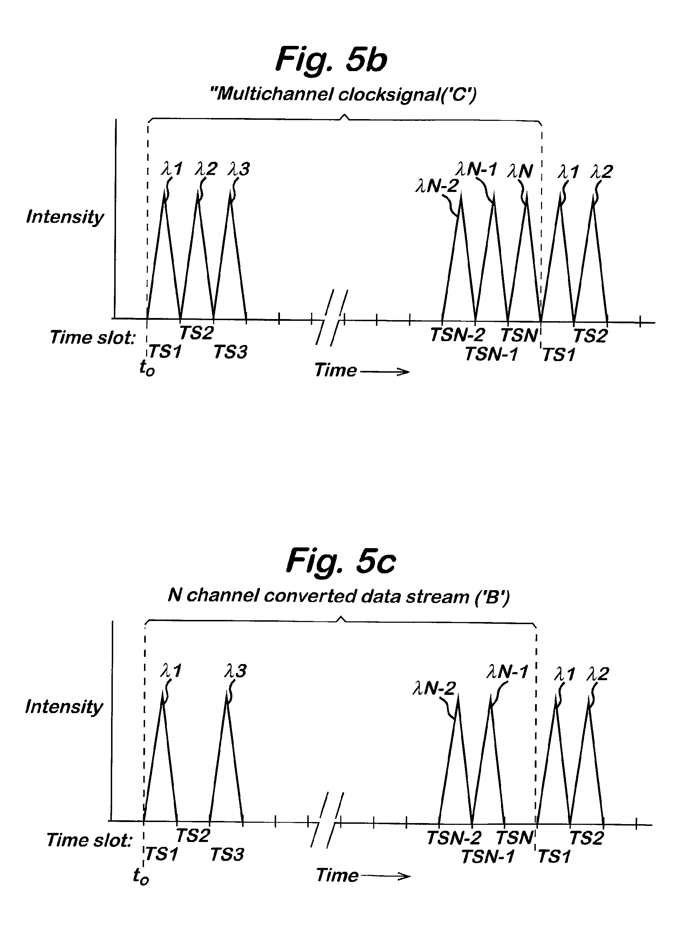

Figure 5 shows a schematic diagram of the function of the wavelength converter 50 as used in the present invention.

Figure 5 shows in a first part I an example of an intensity-time plot of an incoming optical time domain data stream (N channels), coming in the wavelength converter 50 over optical connection A2. On the horizontal axis the time slots TS1 ... TSN for the data bit in the respective channel are plotted. On the vertical axis the pulse intensity for each data bit is plotted. In the example shown here, the first bit in TS1, the bit in TS2, the bit in TSN-2 and the bit in TSN-1 are 'on'. All other bits are 'off. After TSN, the next multiplexed bit sequence will be sent. In the example only the first en second bit are shown (both 'on').

In a second part II an intensity-time plot of the multi-wavelength pulse train from the lambda-time alignment and pulse shaping unit 40 coming in over optical connection C is shown. Each of the N pulses in the pulse train has a specific wavelength λ1, λ2, λ3, ...., λN-2, λN-1, or λN. The time is plotted as pulse time slots PS1 ... PSN on the horizontal axis.

The wavelength converter 50 receives the original incoming optical time domain multiplexed signal over the optical connection A2 and the multi-wavelength pulse train over optical connection C. It is noted that the incoming optical time domain multiplexed signal is synchronous with the multi-wavelength pulse train, i.e., the bit time slots TS1 ... TSN are correlated with the pulse time slots PS1 ... PSN.

In the wavelength converter 50 each data-bit in each time slot TS 1 ... TSN is converted to a bit with the same wavelength as the corresponding pulse in the same time slot in the multi-wavelength pulse train. The incoming optical time domain multiplexed signal (having only one single wavelength for each bit) is thus converted in a converted multiplexed signal having a specific wavelength for each bit (or channel) in the signal.

The result of the conversion (the converted multiplexed signal) is displayed in a third part III in an intensity-time plot. In the third part the same bits are 'on' as the bits in the incoming optical time domain multiplexed signal (i.e. in the same time slots ) shown in the first part I. However, each bit in the converted multiplexed signal has a specific wavelength as indicated by its respective wavelength λ1, λ2, λ3, ...., λN-2, λN-1, or λN.

The converted multiplexed signal is output at the optical connection B and transmitted to the distribution element 60. Distribution element 60 may be a wavelength division multiplexer and splits the converted multiplexed signal in its spectral components (i.e., the bits of the signal encoded by their specific wavelength), and distributes the bits on N individual optical lines D1 ... DN. The N individual optical lines D1 ... Dn each connect to an optical line terminal for the respective data channel, where the data bits are further processed. The number of individual optical lines D1 ... Dn is equal to the number of data channels (and wavelengths) in the incoming optical time domain multiplexed signal.

Advantageously, the de-multiplexing is done completely in the optical domain, no electrical processing is done. This allows faster processing and, as a consequence, a restriction of line rates due to conversion to the electrical domain is not necessary in the present invention. The line rate of the individual optical lines D1 ... Dn is equal to the line rate of the original incoming optical time domain multiplexed signal divided by N, which may still be low enough to be processed in the electrical domain.

The system for full multiplexing and de-multiplexing in accordance with the present invention has the advantage of being scalable to higher numbers of data channels in contrast to systems for multiplexing and de-multiplexing known from the prior art. Also in spite of this scalability, only one single channel selector 20 and one wavelength converter 50 is required in the present invention.

It is noted that in the specification above, the example of a first data channel having a higher intensity than the other data channels is used. It is conceivable to have another data channel being marked by a higher intensity.

Also, the system according to the present invention can be used to extract only a few data channels (instead of all) from the incoming optical time domain multiplexed signal.

Moreover, the data channel marked by a higher intensity may be a data channel that is actually used to transfer data (i.e. 'off and 'on' bits). Also, the higher intensity data channel may be carrying a fixed bit that acts as a clock signal: i.e., the bit in that data channel has a constant value: the higher intensity data channel was inserted in the data stream as clock signal.

As will be appreciated by persons skilled in the art, the system for full multiplexing and de-multiplexing in accordance with the present invention, as described above, can be implemented in a single opto-electronic chip device, which provides the advantage of a relatively simple installation of such a system in optical networks.

It is however noticed, that alternatively the single channel selector 20 may be replaced by an opto-electrical device, e.g. a PLL device, which converts the incoming optical time domain multiplexed signal into an electrical signal, and subsequently feeds the electrical signal to an electrically-RF driven mode-locked laser 30 to generate the multi-wavelength optical pulse.

Again, only a few data channels may be extracted in this manner. By using an electrically extracted clock, time domain slots may be added as well in the multi-wavelength pulse train.

Furthermore, it is noted that instead of a Sagnac interferometer, the choice for a single channel selector 20 may be a fibre-based four wave mixing (FWM) conversion technique or a Mach-Zehnder type wavelength conversion technique, in dependence of the actual line rate and data channel rate.

Finally, it is noted that above the present invention is described as a Feed Forward Demultiplexing system, in which clock recovery is performed before de-multiplexing. It will be appreciated by persons skilled in the art that the present invention may also be applied in a Feed Backward Demultiplexing system in which demultiplexing is performed first and the clock signal is allowed to pass the demultiplexer for clock recovery afterwards. The recovered clock signal is then taken in feedback mode as an input for the demultiplexer.

## Claims

1. System for optical multiplexing and de-multiplexing an optical time domain multiplexed data stream signal, said optical time domain multiplexed data stream signal comprising a plurality of bits ordered in a timed sequence of bits from an equal plurality of data channels, said timed sequence of bits having a bit time slot for each bit in said sequence **characterised in that**
in said optical time domain multiplexed data stream signal one bit of said plurality of bits has with a higher intensity than the other incoming bits of said plurality of bits, and said system comprises a single channel selector (20) for selecting said bit with said higher intensity to obtain a clock signal from said optical time domain multiplexed data stream signal .

2. System for optical multiplexing and de-multiplexing according to claim 1, **characterised in that**
said single channel selector (20) comprises at least one of a semiconductor optical amplifier (SOA), a Mach-Zehnder interferometer, a device based on four wave mixing (FWM), and an opto-electrical device (PLL).

3. System for optical multiplexing and de-multiplexing according to any one of the preceding claims, **characterised in that**
the system comprises:
- a mode-locked laser (30) to convert said clock signal into a multi-wavelength series of pulses; the number of said multi-wavelength series of pulses being equal to said plurality of data channels, and each pulse in said multi-wavelength series of pulses having a specific wavelength, and
- a first wavelength division multiplexer (WDM1) to de-multiplex said multi-wavelength series of pulses in a separate optical path for each pulse in said multi-wavelength series of pulses,
- a delay line (H1, ..., HN) in its respective optical path to delay each pulse of said multi-wavelength series of pulses to gencrate dclaycd pulses, and
- a second wavelength division multiplexer (WDM2) to multiplex each delayed pulse into a pulse train of delayed pulses having a pulse timing (PS1, ..., PSN) substantially equal to said timed sequence of bits (TS1, ..., TSN) in said optical time domain multiplexed data stream signal.

4. System for optical multiplexing and de-multiplexing according to claim 3, **characterised in that** the system comprises a wavelength converter (50) for converting each incoming bit of said plurality of bits in said optical time domain multiplexed data stream signal into a converted bit of said plurality of bits, and each converted bit has said wavelength of said delayed pulse in said pulse train wherein said pulse timing of said delayed pulse (PS1, ..., PSN) substantially corresponds to said time slot (TS1, ..., TSN) of said incoming bit.

5. Optical network comprising a system according to any one of the preceding claims and a plurality of optical sources equal to said plurality of data channels, **characterised in that** one of said plurality of optical sources generates signals with higher intensity than the other optical sources.

6. Method for optical multiplexing and de-multiplexing an optical time domain multiplexed data stream signal, said optical time domain multiplexed data stream signal comprising a plurality of bits ordered in a timed sequence of bits from an equal plurality of data channels, said timed sequence of bits having a bit time slot for each bit in said sequence **characterised in that**
the method comprises:
- providing in said optical time domain multiplexed data stream signal one bit of said plurality of bits with a higher intensity than the other bits of said plurality of bits, and
- selecting by a single channel selector (20) said bit with said higher intensity to obtain a clock signal from said optical time domain multiplexed data stream signal.
